# EUROPEAN PATENT SPECIFICATION

(11) **EP 3 594 423 B1**
(45) Date of publication and mention of the grant of the patent: **16.10.2024**
(21) Application number: 18183296.5
(22) Date of filing: 13.07.2018
(51) Int. Cl.: E04B 1/84, G10K 11/165, C08K 3/34, C08L 89/00, C08L 97/02, C08L 75/00, E04B 1/74, C08G 101/00

(54) **A NATURAL FIBROUS ACOUSTIC COATING AND A METHOD FOR ALTERING ABSORPTION OF FREQUENCIES IN A SPACE**
NATÜRLICHE FASERAKUSTISCHE BESCHICHTUNG UND VERFAHREN ZUR VERÄNDERUNG DER ABSORPTION VON FREQUENZEN IN EINEM RAUM
REVÊTEMENT ACOUSTIQUE EN FIBRES NATURELLES ET MÉTHODE POUR MODIFIER L'ABSORPTION DES FRÉQUENCES DANS UN ESPACE

(43) Date of publication of application: 15.01.2020
(73) Proprietor: Lumir Oy, 01260 Vantaa (FI)
(72) Inventor: HÄNNINEN, Tuomas, 01510 Vantaa (FI)
(74) Representative: Laine IP Oy

(56) References cited:
- DE-U1- 202006 000 201
- JP-A- 2002 265 818
- JP-A- 2004 067 981
- US-A1- 2008 135 327
- US-A1- 2017 132 999
- US-B2- 9 712 913

## Description

### FIELD

The present invention relates to improved acoustic coatings achieved by introducing mesoporous and nanoporous materials, such as zeolite.

### BACKGROUND

When planning and implementing structures, more and more attention is paid to the acoustics of rooms, offices and other spaces. Naturally, functioning acoustics are a prerequisite, for example, in concert halls, but, the acoustics also have significant impacts on the levels of satisfaction, work efficiency, and even human health, for example, in homes, schools, and workplaces. Since structural solutions cannot be selected on the terms of acoustics alone, different acoustic elements or acoustic surfaces, which are installed in the spaces and on their surfaces after the actual construction stage, are needed.

A primary requirement for the functioning of the acoustic surface or element, naturally, is that it has suitable acoustic properties. Generally, this signifies a sound absorption that is sufficiently strong or has a frequency response of a suitable form. On one hand, since the acoustic elements and surfaces are structures that remain in sight, their architectural image should also be suitable for their environment and the other surfaces of the space. The thickness of the panel or surface should remain within reasonable limits, which, on the other hand, is inconsistent with the high requirement of sound absorption. Naturally, the acoustic elements or surfaces should also fulfil the criteria of purity which is set for the surface materials of interiors, and they should also have mechanical and physical properties that are suitable for their environment of use. Similarly to other structural elements, the requirement of considering environmental aspects, to an increasing extent, also applies to the acoustic surfaces and elements with respect to the manufacture and recyclability of the materials, for example.

The most common commercially available, ready-made acoustic elements include mineral wool-based (fibreglass or rock wool-based) acoustic panels. On the sides of these which remain in sight, the surface of the mineral wool is coated, for example, with paper, plastic, fabric or glass fleece. Being relatively light components, these acoustic elements, which are based on insulating wool panels, are simple to install, for example, on the ceiling or walls of the space that is to be provided with sound absorption, either as separate elements or as an unbroken surface. They can also be formed into acoustic planes that are lowered down from the ceiling, for example.

For the coating of walls, ceilings or the like in different interiors, various fibre-based coating compounds are also known, which are sprayed or applied in another way and which provide a mechanical surface structure that is more elastic and durable than glass and rock-based coatings, and which can also contribute to the acoustics of the premises.

For example, the specifications FI 95041 and WO 2007/063178 A1 disclose natural fibre-based coatings that are sprayed when mixed with water, or applied in a similar manner and hardened through drying. The fibre of the coating compound of the specification FI 95041 comprises fine cellulose fibre. In the solution of the specification WO 2007/063178 A1, in addition to the fibre material and the binder, the compound includes particle-like, typically mineral-based fillers, by means of which the surface of the coating becomes smooth and which can adjust the acoustic properties of the coating.

Typically, the fibre-based coatings are attached to the desired acoustic properties requiring surface by binders.

Turning into a completely different technical area, pressure swing adsorption is a technology used for separating some gas species from a mixture of gases under pressure according to the species' molecular characteristics and affinity for an adsorbent material. Specific adsorptive materials (e.g., zeolites, activated carbon, molecular sieves, etc.) are used as a trap, preferentially adsorbing the target gas species at high pressure. The process then swings to low pressure to desorb the adsorbed material. It is therefore known, that e.g. zeolite interacts with air molecules.

Zeolite fibers have lately attracted growing interest for also a range of other applications because of their structural particularity while maintaining the intrinsic performances of the building blocks of zeolites. Tran *et al.* (2014) describes ion exchange capability of electrospun cellulose acetate (CA) fibers containing zeolite A nanoparticles. Liu *et al.* (2014) describes the use of hierarchical macro-meso-microporous ZSM-5 zeolite hollow fibers having highly efficient catalytic cracking capability. Tatlier *et al.* (2018) on the other hand investigated the relation of water adsorption capacities of zeolites with their structural properties, and observed that the theoretical surface areas and volumes available for water adsorption in zeolites as well as the fractal dimensions of these materials exhibited some correlation with their experimental adsorption capacities. Sashkina *et al.* (2018) aimed their investigation for using zeolites as a part of a composite or aerogel structure.

Other prior art acoustic solutions discussing also the possibility of using zeolite may be found from US 2015/0271579 A1, US 9,712,913 B2, US 2015/0358721 A1, US 9,635,455 B2 and US 9,691,371 B1. These publications, however, relate mostly to acoustic devices, wherein zeolite is used for example as a component of speakers. JP 2002 265818 A discloses another example of coating comprising zeolite.

### SUMMARY OF THE INVENTION

The invention is defined by the features of the independent claims. Some specific embodiments are defined in the dependent claims.

According to an aspect of the present invention, there is provided a natural fibrous acoustic coating, comprising a mesoporous or nanoporous material(s).

This and other aspects, together with the advantages thereof over known solutions are achieved by the present invention, as hereinafter described and claimed.

The acoustic coating of the present invention is mainly characterized by what is stated in the characterizing part of claim 1.

Considerable advantages are obtained by means of the invention. Meso- and nanoporous materials provide thin and light sound absorbing and sound insulating solutions, which can consist purely or partly of the meso- and nanoporous material. Combination of fibrous matter and for example a zeolite material provides acoustic coatings, wherein the absorption frequencies can be easily altered to meet the sound absorption requirements of a given space. In addition, the acoustic coating can be applied, for example by spraying, straight on to a surface of a sound absorption requiring structure without any ground work, yet providing a plain surface. Furthermore, the fibrous acoustic coating according to the present invention is applicable to the targeted surface without using any binders. Also, fibrous coatings are not harmful for consumers and they enable moisture vaporization from the below structures. Foam applications comprising mesoporous or nanoporous material(s) also widen the usability of the present invention even further.

Next, the present technology will be described more closely with reference to certain embodiments.

### EMBODIMENTS

The present technology provides novel solutions for sound absorbing and sound insulating purposes by utilizing mesoporous and nanoporous material(s), which have proven to result excellent acoustic properties.

The present technology also provides acoustic coatings on various background structures that improves the acoustic properties of premises and reduces the drawbacks of the known solutions. The present technology is particularly suitable for reducing reverberation in inner acoustics of premises. Furthermore, the acoustic solution of the present invention provides thin acoustic coatings, which can be easily tailored to meet the varying soundproofing requirements of different spaces.

One purpose of the invention, in particular, is to provide a sound absorbing or sound insulating coating, which is formed from mesoporous or nanoporous material(s) with a fibrous coating composition, which is particularly suitable for the purpose and which provides effective sound absorption, and from which no significant amounts of dust or other particles come off, even after drying.
FIGURE 1 is a schematic drawing demonstrating the technical effect of sound waves attenuation achieved by the coatings of the present invention.
FIGURE 2 is a diagram showing an acoustic behavior of a zeolite material having medium silica content between frequencies of 125 to 6000 Hz.
FIGURE 3 is a diagram showing an acoustic behavior of a zeolite material having high silica content between frequencies of 125 to 6000 Hz.

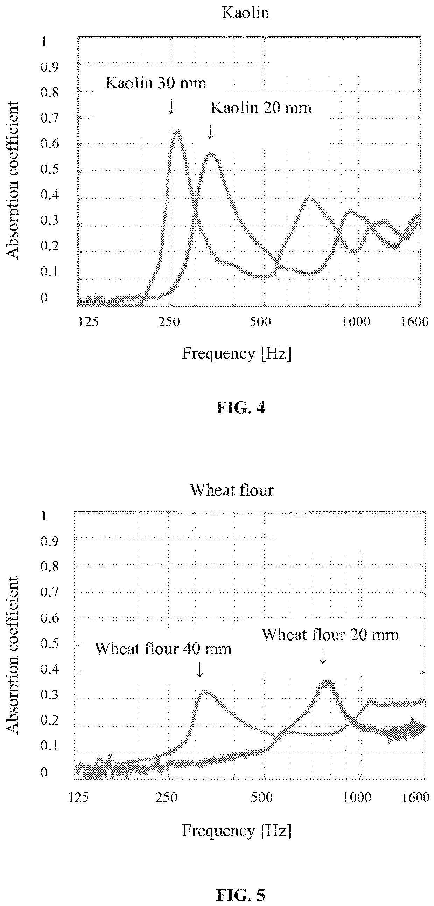

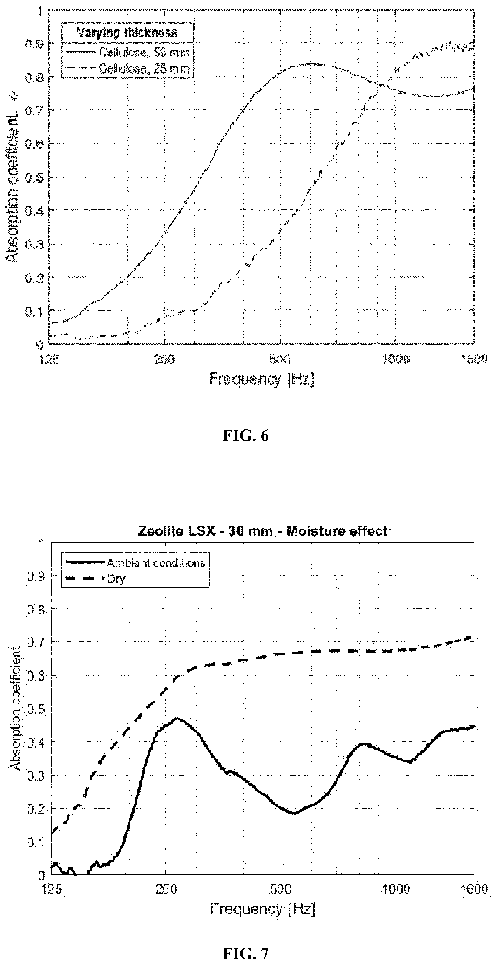

FIGURES 4, 5 and 6 describe completely different acoustic behaviors of kaolin powder, wheat flour and cellulose, respectively, with varying thicknesses, especially when compared to zeolite in low frequencies.
FIGURE 7 describes the effect of drying for the sound absorption of moisture sensitive LSX-zeolite. Dry sample is oven-dried in 200 °C overnight, whereas ambient sample has been stored in normal in-house conditions.

The present invention is based on affecting the movement of air molecules, mainly oxygen and nitrogen, with nanoscale structures and by utilizing surface chemistry. More precisely, sound waves are based on pressure differences caused by rarefication and densification of air molecules. Absorption and desorption of air molecules in mesoporous and nanoporous materials decreases the pressure differences, which lead to attenuation of the sound waves.

Thus, one example of the present disclosure is a sound absorbing and/or sound insulating coating, comprising mesoporous or nanoporous material(s) selected from zeolites, porous silicon-based structures and carbon-based structures, wherein the medium is air. Thus, the coating can serve as an additive together with other sound absorbing or sound insulating material. Also mixtures of different mesoporous or nanoporous materials are within the scope of the present invention. The medium in this context is understood as the material or empty space through which sound waves pass.

Preferably, the used mesoporous or nanoporous material is hydrophobic or adsorbs moisture poorly. This feature enables their use in normal humidity without decreasing the sound absorption ability. The pores of hydrophilic materials tend to block with water molecules, which in turn decrease the absorption values, whereby hydrophilic materials are not preferred herein. In other words, water molecules tend to block the mesoporous or nanoporous material, whereby it cannot interact with air and thus attenuate sound waves effectively.

The object of the present invention is an acoustic coating, wherein the acoustic coating is made of a natural fibrous matter, and further comprises a mesoporous or nanoporous material, such as zeolite material, in the form of a powder, a particle or a fiber, which coating is suitable to be applied on at least one surface of a soundproofing requiring background structure, and wherein the fibrous matter forms a plain network on top of the background surface.

The sound absorbing or sound insulating structure can be for example an acoustic element, or a wall structure, or any other structure, which requires soundproofing.

According to one embodiment of the present invention, the fibrous matter i.e. natural fibrous matter is vegetable fibre, such as cellulose, flax, cotton or hemp fibre, or animal-based fibre, such as silk or wool-based fibre, or a mixture of such fibres.

According to a preferred embodiment of the present invention, the natural fibrous matter is vegetable fibre, preferably cellulose fibre.

According to one embodiment of the present invention, the zeolite material is present either on the surface or inside the pores of the natural fibrous matter. It can thus be mixed with the natural fibrous matter, wherein zeolite attaches to the surface of the fibers, such as cellulose fibers. In order to improve the fiber-zeolite attachment, additional binders may be used. On the other hand, during mixing zeolite may also attach to the pores of the natural fibrous matter. Thereby the structure according to the present invention may be either a closed-cell or an open-cell structure.

In one embodiment of the present invention no binders are used.

In another embodiment of the present invention, binders selected from carboxy-methyl cellulose, hydroxypropyl cellulose, methyl cellulose, ethylene vinyl acetate, polyvinyl alcohol, polyvinyl acetate, polyvinyl chloride, polyolefins, various starches and latexes, acryl-based or silicates, as well as derivatives and mixtures thereof, preferably being of the dispersion type, such as 1- or 2-component dispersion glues are comprised in the acoustic structure.

In the present context different types of zeolites may be used as the mesoporous or nanoporous material. Examples of such are AFI, BEA, CHA, FER, FAU, LTA, MFI, TON and MOR. Also zeolite materials synthesized from fly ash may be used.

In one embodiment of the present invention the coating has a thickness between 1 to 35 mm. The present invention provides effective sound absorption already at low frequencies with relatively thin layers. This is not typical for other similar particles/powders/fibers than zeolite, as can be seen from the figures of the present application. The thickness of the sound absorbing or sound insulating structure can be lowered down to half, or even more, when compared to other typical absorbent materials, such as for example mineral fibers or plain cellulose structures.

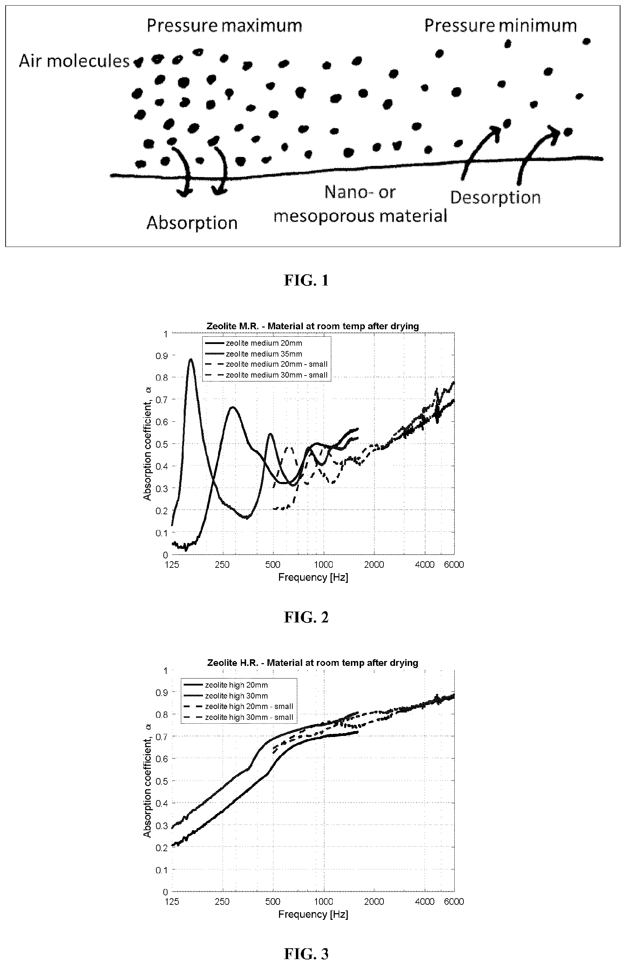

Absorption features may be altered by changing the nanoporosity or fractal dimensions of the sound absorbing or sound insulating structure, for a tailored soundproofing of the space in question. This can be done for example by changing the dose of mesoporous or nanoporous material(s) within the given structure. This can be seen for example from figures 2 and 3.

In one embodiment of the present invention, the mesoporous or nanoporous material(s) is used as a filler and similarly as typical fillers.

According to the present invention, the sound absorbing or sound insulating coating comprises a fire retardant and an anti-rot agent, selected from a group of boron-based substances, such as boric acid or borax or a mixture thereof, hydroxides, such as aluminium or magnesium hydroxide or a mixture thereof, or absorbing agents, such as talc or calcium carbonate or a mixture thereof, most preferably boric acid or borax, particularly a mixture thereof, in an amount of 8-25% by weight of the dry matter at the most.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

The present invention is applicable to for example walls and other kinds of structures in for example buildings, providing acoustic solutions mainly to the inner acoustic needs of the space formed by such structures. The sound absorbing or sound insulating coating according to the present invention can be for example sprayed to the target surface. Furthermore, the solution provided herein may serve as a part of the material applied for ear plugs, headphones or other similar purpose serving hearing protectors, for example in a foam structure, such polyurethane foam. One further application area is automotive interiors, whereto the present invention provides effective, but yet thin and light acoustic solutions. Coatings disclosed herein may also be utilized in noise abatement applications, for example as a sound barrier or part of such.

### EXAMPLES

Natural fibrous acoustic coating comprises:
- 50-90 wt-% natural fibres
- 10-30 wt-% binder
- 5-25 wt-% fire retardant
- 5-20 wt-% zeolite
- 0-10 wt-% pigments

Natural fibrous acoustic coating is prepared by dispersing or dissolving components in solvent, such as water. Dry matter content of the coating can vary between 50 to 5 wt-%. Spreading the acoustic coating into a desired surface can be carried out for example by spraying or leveling, or by molding for manufacturing acoustic panels.

### CITATION LIST

### Patent literature

1. FI 95041
2. WO 2007/063178 A1
3. US 2015/0271579 A1
4. US 9,712,913 B2
5. US 2015/0358721 A1
6. US 9,635,455 B2
7. US 9,691,371 B1

### Non-patent literature

Liu J., Jiang G., Liu Y., Di J., Wang Y., Zhao Z., Sun Q., Xu C., Gao J., Duan A., Liu J., Wei Y., Zhao Y., Jiang L., Hierarchical Macro-meso-microporous ZSM-5 Zeolite Hollow Fibers With Highly Efficient Catalytic Cracking Capability, Nature, Scientific Reports volume 4, Article number: 7276 (2014).
Tran D. N., Marti A. M., Balkus Jr. K. J., Electrospun Zeolite/Cellulose Acetate Fibers for Ion Exchange of Pb2+, Fibers 2014, 2(4), 308-318; doi:10.3390/fib2040308.
Tatlier M., Munz G., Henninger S. K., Relation of water adsorption capacities of zeolites with their structural properties, Microporous and Mesoporous Materials, 2018, Vol. 264, pp. 70-75.
Sashnika K. A., Gurikov P. A., Ayupov A. B., Smirnova I., Parkhomchuk E. V., Zeolite/silica aerogel composite monoliths and microspheres, Microporous and Mesoporous Materials, 2018, Vol. 263, pp. 106-112.

## Claims

1. A natural fibrous acoustic coating, **characterized in** comprising:
- 50-90 wt-% natural fibres
- 10-30 wt-% binder
- 5-25 wt-% fire retardant and/or anti-rot agent
- 5-20 wt-% zeolite, and
- 0-10 wt-% pigments

2. The acoustic coating according to claim 1, **characterized in that** the natural fibrous matter is vegetable fibre, such as cellulose, flax, cotton or hemp fibre, or animal-based fibre, such as silk or wool-based fibre, or a mixture of such fibres.

3. The acoustic coating according to claim 1 or 2, **characterized in that** the natural fibrous matter is vegetable fibre, preferably cellulose fibre.

4. The acoustic coating according to any preceding claims, **characterized in** having a thickness between 1 to 35 mm.

5. The acoustic coating according to any preceding claims, **characterized in that** the fire retardant and/or anti-rot agent is selected from a group of boron-based substances, such as boric acid or borax or a mixture thereof, hydroxides, such as aluminium or magnesium hydroxide or a mixture thereof, or absorbing agents, such as talc or calcium carbonate or a mixture thereof, most preferably boric acid or borax, particularly a mixture thereof.

6. The acoustic coating according to any preceding claims, **characterized in that** the binder is selected from carboxy-methyl cellulose, hydroxypropyl cellulose, methyl cellulose, ethylene vinyl acetate, polyvinyl alcohol, polyvinyl acetate, polyvinyl chloride, polyolefins, various starches and latexes, acryl-based binders and silicates, as well as derivatives and mixtures thereof, preferably being of the dispersion type, such as 1- or 2-component dispersion glues.

7. Use of the acoustic coating according to any preceding claims in inner spaces of premises, which require soundproofing.

8. A method for altering absorption of frequencies in a space, by applying an acoustic coating, for example by spraying, straight on to a background surface of a sound absorption requiring structure of the space, preferably to a surface of a wall structure and/or a ceiling, the coating providing a plain surface, wherein the acoustic coating is made of natural fibrous matter and further comprises a mesoporous or nanoporous material(s) selected from zeolites, porous silicon-based structures and carbon-based structures in a form of a powder, a particle or a fiber, **characterized in that** the natural fibrous acoustic coating comprises:
- 50-90 wt-% natural fibres
- 10-30 wt-% binder
- 5-25 wt-% fire retardant
- 5-20 wt-% zeolite
- 0-10 wt-% pigments

## Patentansprüche

1. Natürliche faserige Akustikbeschichtung, **dadurch gekennzeichnet, dass** sie umfasst:
- 50-90 Gew.-% an Naturfasern
- 10-30 Gew.-% an Bindemittel
- 5-25 Gew.-% an Flammschutzmittel und/oder Fäulnisschutzmittel
- 5-20 Gew.-% an Zeolith, und
- 0-10 Gew.-% an Pigmenten

2. Akustikbeschichtung nach Anspruch 1, **dadurch gekennzeichnet, dass** der natürliche Faserstoff Pflanzenfaser, wie Zellulose-, Flachs-, Baumwoll- oder Hanffaser, oder Faser auf tierischer Basis, wie Faser auf Seide- oder Wollbasis, oder ein Gemisch solcher Fasern ist.

3. Akustikbeschichtung nach Anspruch 1 oder 2, **dadurch gekennzeichnet, dass** der natürliche Faserstoff eine Pflanzenfaser, vorzugsweise eine Zellulosefaser ist.

4. Akustikbeschichtung nach einem der vorstehenden Ansprüche, **dadurch gekennzeichnet, dass** sie eine Dicke zwischen 1 und 35 mm aufweist.

5. Akustikbeschichtung nach einem der vorstehenden Ansprüche, **dadurch gekennzeichnet, dass** das Flammschutzmittel und/oder Fäulnisschutzmittel aus einer Gruppe von Substanzen auf Borbasis, wie Borsäure oder Borax oder einem Gemisch davon, Hydroxiden, wie Aluminium- oder Magnesiumhydroxid oder einem Gemisch davon, oder Absorptionsmitteln, wie Talk oder Kalziumcarbonat oder ein Gemisch davon, besonders bevorzugt Borsäure oder Borax, insbesondere einem Gemisch davon ausgewählt ist.

6. Akustikbeschichtung nach einem der vorstehenden Ansprüche, **dadurch gekennzeichnet, dass** das Bindemittel aus Carboxymethylcellulose, Hydroxypropylcellulose, Methylcellulose, Ethylenvinylacetat, Polyvinylalkohol, Polyvinylacetat, Polyvinylchlorid, Polyolefinen, verschiedenen Stärken und Latices, Bindemitteln auf Acrylbasis und Silikaten sowie Derivaten und Gemischen davon, bevorzugt vom Dispersionstyp, wie 1- oder 2-Komponenten-Dispersionskleber ausgewählt ist.

7. Verwendung der Akustikbeschichtung nach einem der vorstehenden Ansprüche in Innenräumen von Gebäuden, welche einer Schalldämmung bedürfen.

8. Verfahren zum Ändern der Absorption von Frequenzen in einem Raum durch Aufbringen einer Akustikbeschichtung, beispielsweise durch Aufsprühen, direkt auf eine Hintergrundoberfläche einer schallabsorbierenden Struktur des Raums, bevorzugt auf eine Oberfläche einer Wandstruktur und/oder einer Decke, wobei die Beschichtung eine glatte Oberfläche bereitstellt, wobei die Akustikbeschichtung aus natürlichem Faserstoff besteht und weiter ein oder mehrere mesoporöse oder nanoporöse Materialien umfasst, ausgewählt aus Zeolithen, porösen Strukturen auf Siliziumbasis und Strukturen auf Kohlenstoffbasis in Form eines Pulvers, eines Partikels oder einer Faser, **dadurch gekennzeichnet, dass** die natürliche faserige Akustikbeschichtung umfasst:
- 50-90 Gew.-% an Naturfasern
- 10-30 Gew.-% an Bindemittel
- 5-25 Gew.-% an Flammschutzmittel
- 5-20 Gew.-% an Zeolith
- 0-10 Gew.-% an Pigmenten

## Revendications

1. Revêtement acoustique fibreux naturel, **caractérisé en ce qu'**il comprend :
- 50-90 % en poids de fibres naturelles
- 10-30 % en poids de liant
- 5-25 % en poids d'agent ignifuge et/ou anti-pourriture
- 5-20 % en poids de zéolite, et
- 0-10 % en poids de pigments

2. Revêtement acoustique selon la revendication 1, **caractérisé en ce que** la matière fibreuse naturelle est une fibre végétale, telle que la fibre de cellulose, le lin, le coton ou le chanvre, ou une fibre d'origine animale, telle que la fibre à base de soie ou de laine, ou un mélange de telles fibres.

3. Revêtement acoustique selon la revendication 1 ou 2, **caractérisé en ce que** la matière fibreuse naturelle est une fibre végétale, de préférence une fibre cellulosique.

4. Revêtement acoustique selon une quelconque des revendications précédentes, **caractérisé en ce qu'**il présente une épaisseur entre 1 et 35 mm.

5. Revêtement acoustique selon une quelconque des revendications précédentes, **caractérisé en ce que** le produit ignifuge et/ou l'agent anti-pourriture est choisi dans un groupe composé de substances à base de bore, telles que l'acide borique ou le borax ou un mélange de ceux-ci, d'hydroxydes, tels que l'hydroxyde d'aluminium ou de magnésium ou un mélange de ceux-ci, ou d'agents absorbants, tels que le talc ou le carbonate de calcium ou un mélange de ceux-ci, le plus préférentiellement l'acide borique ou le borax, en particulier un mélange de ceux-ci.

6. Revêtement acoustique selon une quelconque des revendications précédentes, **caractérisé en ce que** le liant est choisi parmi la carboxyméthylcellulose, l'hydroxypropylcellulose, la méthylcellulose, l'éthylène-acétate de vinyle, l'alcool polyvinylique, l'acétate de polyvinyle, le chlorure de polyvinyle, les polyoléfines, divers amidons et latex, les liants et silicates à base acrylique, ainsi que des dérivés et des mélanges de ceux-ci, de préférence qui est du type dispersion, tels que les colles de dispersion à 1 ou 2 composants.

7. Utilisation du revêtement acoustique selon une quelconque des revendications précédentes dans des espaces intérieurs de locaux qui nécessitent une insonorisation.

8. Procédé pour modifier une absorption de fréquences dans un espace, en appliquant un revêtement acoustique, par exemple en pulvérisant, directement sur une surface d'arrière-plan d'une structure nécessitant une absorption sonore de l'espace, de préférence sur une surface d'une structure de paroi et/ou d'un plafond, le revêtement fournissant une surface pleine, dans lequel le revêtement acoustique est composé d'une matière fibreuse naturelle et comprend en outre un ou plusieurs matériaux mésoporeux ou nanoporeux choisis parmi des zéolites, des structures poreuses à base de silicium et des structures à base de carbone sous la forme d'une poudre, d'une particule ou d'une fibre, **caractérisé en ce que** le revêtement acoustique fibreux naturel comprend :
- 50-90 % en poids de fibres naturelles
- 10-30 % en poids de liant
- 5-25 % en poids d'agent ignifuge
- 5-20 % en poids de zéolite
- 0-10 % en poids de pigments
